# EUROPEAN PATENT SPECIFICATION

(11) **EP 0 397 111 B1**
(45) Date of publication and mention of the grant of the patent: **27.03.1996**
(21) Application number: 90108651.2
(22) Date of filing: 08.05.1990
(51) Int. Cl.: G06K 15/02

(54) **Output device with user-definable relationships between character codes and displayed characters**
Ausgabegerät mit anwenderdefinierbarer Beziehung zwischen Zeichenkoden und ausgegebenen Zeichen
Dispositif d'affichage avec rapports entre les codes de caractères et les caractères affichés definis par l'utilisateur

(30) Priority: 08.05.1989 JP 114608/89
(43) Date of publication of application: 14.11.1990
(73) Proprietor: SEIKO EPSON CORPORATION, Shinjuku-ku Tokyo (JP)
(72) Inventor: Kagita, Osamu, c/o Seiko Epson Corporation, Suwa-shi, Nagano (JP)
(74) Representative: Diehl, Hermann O. Th., Dr.

(56) References cited:
- ELEKTOR ELECTRONICS vol. 15, no. 167, May 1989, pages 54-56, London, GB; N. WILLMANN: "Code converter for Centronics-compatible printers"
- idem
- IMB TECHNICAL DISCLOSURE BULLETIN vol. 24, no. 8, January 1982,
- pages 4361,4362, Armonk, NY, US; J.I. COMPTON: "Non-volatile semiconductor storage for printers"
- PATENT ABSTRACTS OF JAPAN vol. 11, no. 285 (P-616), 16 September 1987; & JP - A - 62080737 (MITSUBISHI ELECTRIC CORP.) 14.04. 1987

## Description

This invention relates to an image forming device.

To print a sentence created by an external device such as a host computer using a printer and the like, a general operation is that code signals for specifying characters used in the sentence are transferred to the printer through a cable and that the transferred code signals are converted into font data by the printer.

To this end, the code signals and the kinds of character are specified by the national standard. Taking European characters as an example, many countries assign common codes to main characters, but there are no common codes for characters and symbols unique to one particular language.

Thus, when there is no common standard in the relationship between characters and their character codes, it is necessary for a manufacturer of printers to prepare data serving to tie a set of code signals modified for its particular end user to a set of characters; or it is sometimes desired that the character codes be changed by the user.

Although it is possible to make such a change on the set of character codes by entering a new set of character codes from an external entry means and storing them in a storage means with the printer started, once the printer has been turned off, the stored data is lost and it is necessary to enter the lost character code data once again at the restart of the printer. This complicates the printing operation. In ELEKTOR ELECTRONICS, vol. 15, 1989, the article "Code Converter for Centronics-compatible printers" describes a device which allows manually switching among several preprogrammed sets of character codes. However, a user cannot easily modify these sets for adaptation to his or her personal requirements.

The present invention has been made in consideration of the above problem and has as an object the provision of an image forming device allowing a specific set of character codes to be prepared for use in printing automatically at the start of a printer once a required set of symbols are once called by an ID and registered. This object is solved by the image forming device of independent claim 1. Further advantageous features of the invention are evident from the dependent claims and the following description and drawings.

The image forming device of the present invention is capable of determining the relationship between a character code that specifies the kind of character and a character that corresponds to the character code in a printer and the like.
Fig. 1 is a block diagram showing an embodiment of an image forming device according to the present invention;
Fig. 2 is a schematic showing an embodiment of a circuit for storing character code correspondence data;
Fig. 3 is a schematic representation showing an example of a set of symbols;
Fig. 4 is a front view showing an embodiment of a panel screen;
Fig. 5 is a flow chart showing an operation of the device shown in Fig. 1;
Figs. 6a and 6b are diagrams showing examples of a menu screen in the symbol set registration mode and in the symbol set selection mode, respectively;
Fig. 7 is a schematic representation showing data to be stored in a symbol set storing circuit; and
Fig. 8 is a diagram showing the relationship between the character codes and the characters after a set of symbols has been changed.

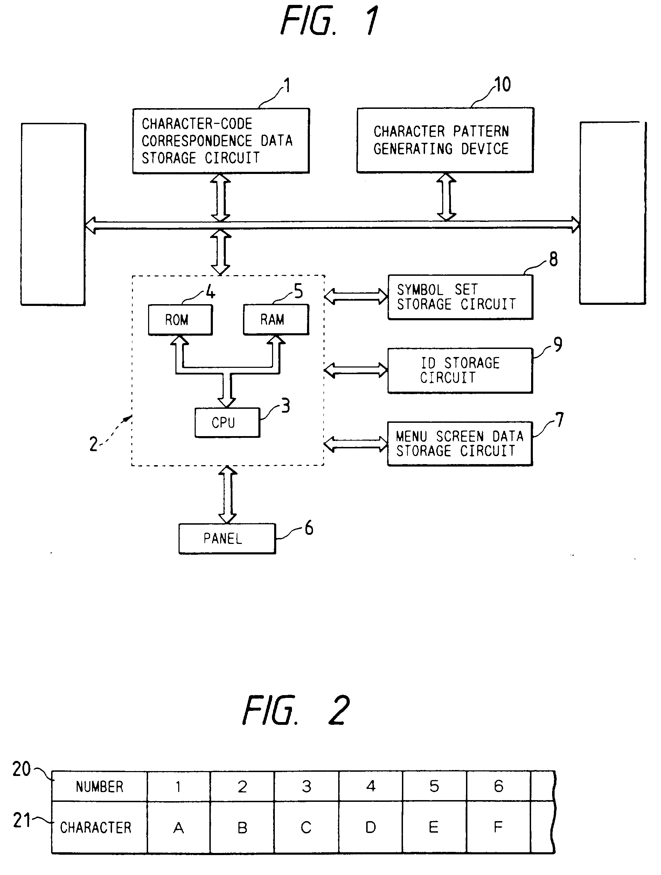

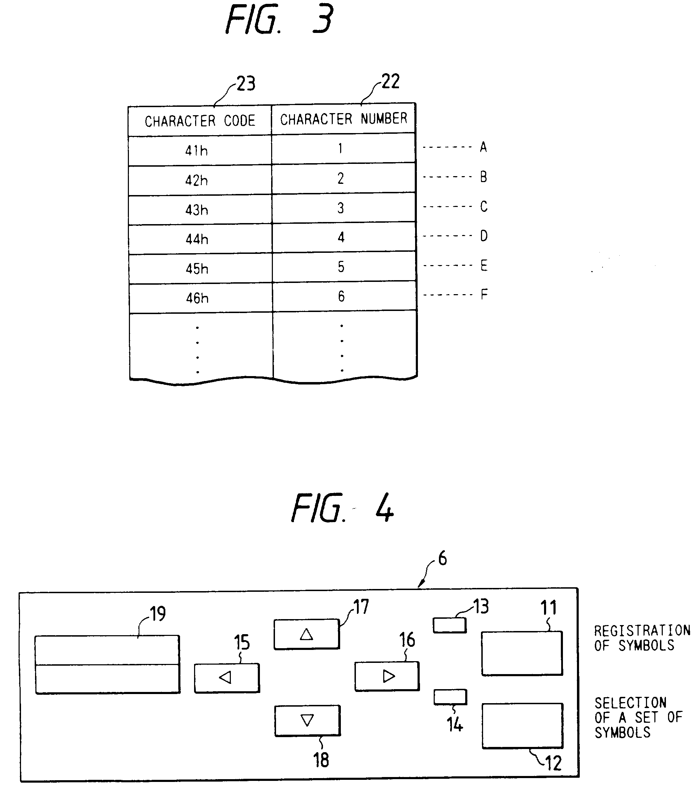

Fig. 1 shows an embodiment of the present invention. In the figure, reference numeral 1 designates a character code correspondence data storage circuit, which has, as shown in Fig. 2, a number column 20 and a character column 21 and stores data in which each of characters "A," "B," "C," "D," "E," ··· is affixed by each of character numbers "1," "2," "3," "4," "5," ···. As shown in Fig. 3, a character number column 22 and a character code column 23 are further arranged, by which a character code is made to correspond with a character through a character number; i.e., each character code "41h," "42h," "43h," "44h" ··· is tied with each character number "1," "2," "3," "4," ··· in correspondence, thereby allowing each character to be read based on the character code.

Returning to Fig. 1, reference numeral 2 designates a microcomputer comprising a central processing unit (CPU) 3, a read only memory (ROM) 4, and a random access memory (RAM) 5. This microcomputer 2 is operated based on a program such as shown by a flow chart (described later). Reference numeral 6 designates a panel for registering or selecting a set of characters, and, as shown in Fig. 4, it is arranged together with a symbol set registration key 11 for selecting a mode of registering a set of symbols, a symbol set selection key 12 for selecting the registered set of symbols, a symbol save key 13 for entering a command for storing a set of symbols to be registered upon definition of such a set of symbols, an online key 14 for selecting the printing mode, cursor movement keys 15, 16, 17, and 18 for selecting menu items, and a display unit 19 made of, e.g., a liquid crystal display.

Returning to Fig. 1 again, reference numeral 7 designates a menu screen data storage circuit, which is constructed so that it will store data for displaying a menu for making various entries and selections from the key or keys on the panel 6.

Reference numeral 8 designates the symbol set storage circuit comprising a nonvolatile storage element such as a RAM backed up by a battery or an electrically erasable ROM. The symbol set storage circuit is constructed so that it will store a set of symbols entered from the panel.

Reference numeral 9 designates an ID storage circuit comprising a nonvolatile storage element such as a RAM backed up by a battery or an electrically erasable ROM. The ID storage circuit is constructed so that it will store the ID of a selected set of symbols.

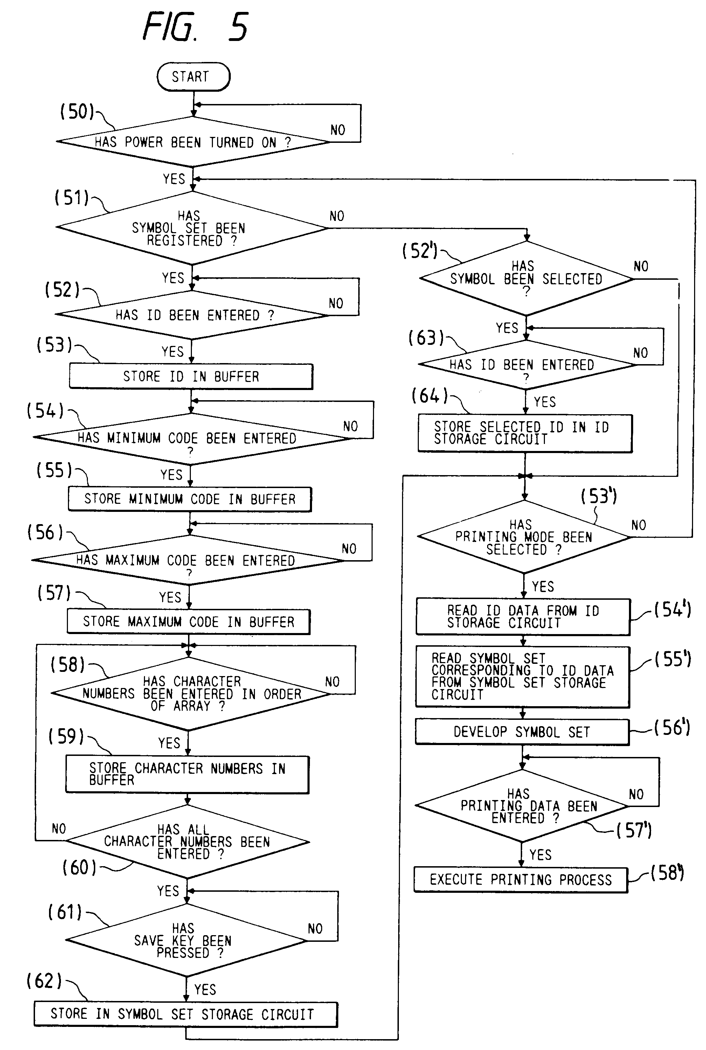

An operation of the device thus constructed will be described with reference to the flow chart shown in Fig. 5.

When the printer is powered (Step 50) and the printing mode is selected by the online key 14 (Step 53′), the microcomputer 2 accesses the ID storage circuit 9 to read ID data (Step 54′). It then accesses the symbol set storage circuit 8 to read symbol set data registered therein.

In this case, since there is no registered set of symbols, data in the character code correspondence data storage circuit 1 are developed in a work area (Steps 55′ and 56′). That is, characters are produced based on the character code-character correspondence data (Fig. 3) stored in the character code correspondence storage circuit 1; i.e., "A" in correspondence with the character code "41h," "B" to the character code "42h," and "C" to the character code "43h," and so on.

When printing data is entered under this condition (Step 57′), each character is applied to a character pattern generating device 10 to convert it to bit pattern data that is printable.

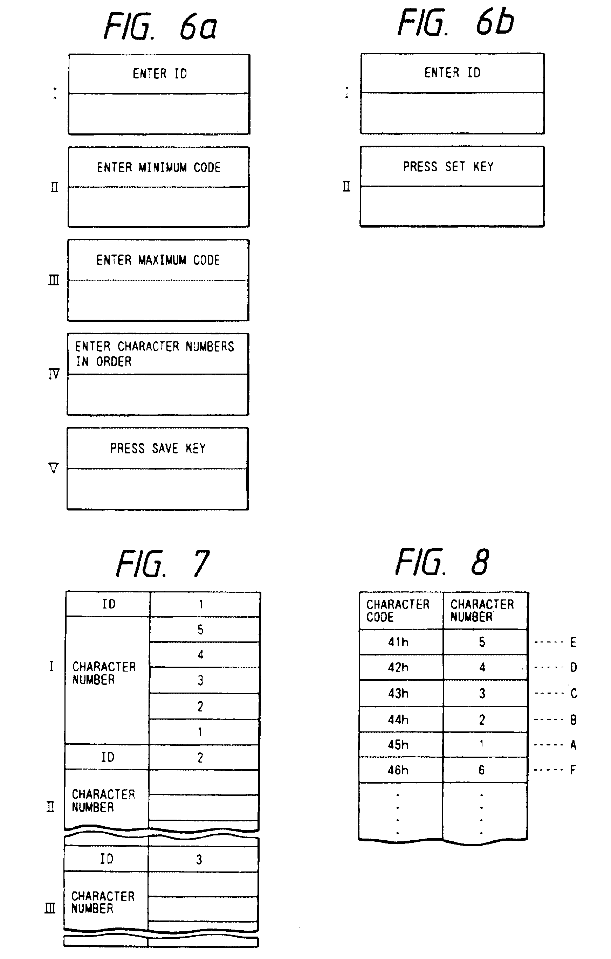

On the other hand, to change the correspondence between the character and the character code, the symbol set registration key 11 of the panel 6 is pressed (Step 51). As a result, a symbol set registration start command is received by the microcomputer 2, which then gets ready for accepting a new set of symbols and causes the display unit 19 to display a screen prompting the entry of an ID such as shown by part (I) of Fig. 6a.

When a number or symbol, e.g. "1," is entered by operating the ten key or the like under this condition, the microcomputer 2 causes the display unit 19 to display the ID "1" just entered. When the symbol save key 14 is subsequently pressed, the microcomputer 2 temporarily stores the ID "1" in a buffer or the like (Step 53). Then, when the cursor movement key 18 is pressed, the microcomputer 2 causes the display unit 19 to display a screen prompting the entry of a minimum value of a character code to be registered such as shown by part (II) of Fig. 6 (a) (Step 54). When the character code to be changed, e.g. "41h," is entered from the ten key under this condition, and the symbol save key 14 is pressed, this is temporarily stored in the buffer or the like (Step 55).

After the minimum code has been stored, the microcomputer 2 causes the display unit 19 to display a screen prompting the entry of a maximum value of a character code to be changed (part III of Fig. 6a) (Step 56). when the maximum value of the character code to be changed, e.g. "45h," is entered and the symbol set save key 14 is pressed under this condition, the microcomputer 2 temporarily stores the maximum code in the buffer or the like (Step 57).

Subsequently, the microcomputer 2 causes the display unit 19 to display a screen requesting the input of the correspondence between the code to be changed and the character (part IV of Fig. 6a) (Step 58). The character numbers are entered in the order of array; i.e., "5," "4," "3," "2," and "1," under this condition (Step 58). Upon entry of the character numbers of the characters whose character codes are to be changed (Steps 59 and 60), the symbol set save key 14 is pressed (Step 61). Then, the microcomputer 2 stores the set of symbols just registered in the symbol set storage circuit 8 (Step 62). Accordingly, the data causing the character code "41h" to correspond with the character number "5," the character code "42h" with the character number "4," the character code "43h" with the character number "3," the character code "44h" with the character number "2," and the character code "45h" with the character number "1" are stored in the symbol set storage circuit 8.

In case of registering another set of symbols, an ID that is different from the ID already registered is used. Thus, the set of symbols with the new ID will be registered in the symbol set storage circuit 8 as an independent set of symbols (areas II and III of Fig. 7).

In the case where a character code system different from that (Fig. 3) stored in the character code correspondence storage circuit 1, the symbol set selection key 12 is pressed (Step 52′) so that the microcomputer 2 will cause a screen prompting the entry of an ID such as shown by part I of Fig. 6b to be displayed (Step 63). The ID now registered in the symbol set storage circuit 8, i.e. "1" in this case, is displayed on the display unit 19 and the symbol set save key 14 is pressed. If a plurality of IDs are registered, the microcomputer 2 causes each ID to be sequentially displayed every time the cursor movement key is pressed.

The microcomputer 2 then stores the ID "1" in the ID storage circuit 9 (Step 64) and moves to the printing mode (Step 53′).

The microcomputer 2, under this condition, accesses the ID storage circuit 9 to read the ID "1" therein registered (Step 54′), accesses the symbol set storage circuit 8 to read the symbol set data registered with the ID "1" (Step 55′), and develop the read data in the work area.

Accordingly, it is possible to produce the characters based on the definition of the changed character codes as shown in Fig. 8.

If an ID has been registered in the ID storage circuit 9 by the previously described steps and the printing mode has been specified by the online key 13, the microcomputer 2, upon turning the power on, accesses the ID storage circuit 9 and automatically develops the new character-character code correspondence by the Steps 54′ to 56′.

In the above embodiment, although a set of undefined characters and their codes are defined by grouping them with a minimum character code and a maximum character code, it goes without saying that the same effects will be obtained by defining the data on a single character basis.

## Claims

1. An image forming device, comprising:
a panel (6) for registering at least one set of symbols in which a character and a code of a font to be used for image processing are tied with an ID data and for selecting a registered set of symbols by selecting its ID data;
first storage means (8) for storing said set of symbols;
second storage means (9) for storing said selected ID data on a nonvolatile basis; and
means (2) for reading said set of symbols based on said selected ID data by accessing said second storage means (9) at a start time of the device.

2. An image forming device as claimed in claim 1, wherein said first and second storage means comprise an electrically erasable read only memory, respectively.

3. An image forming device as claimed in claim 1, wherein said first and second storage means comprise a random access memory backed up by a battery, respectively.

## Patentansprüche

1. Bilderzeugungsvorrichtung mit:
einem Bedienelement (6) zur Registrierung mindestens eines Symbolsatzes, wobei ein Zeichen und Code eines Fonts zur Verwendung für Bildverarbeitung mit Kennzeichnungsdaten verbunden sind, und zur Auswahl eines registrierten Symbolsatzes durch Auswahl der Kennzeichnungsdaten hiervon;
einer ersten Speichereinrichtung (8) zur Speicherung des Symbolsatzes;
einer zweiten Speichereinrichtung (9) zur Speicherung der ausgewählten Kennzeichnungsdaten auf einer nichtflüchtigen Basis; und
einer Einrichtung (2) zum Lesen des Symbolsatzes basierend auf den ausgewählten Kennzeichnungsdaten durch Zugriff auf die zweite Speichereinrichtung (9) bei einer Startzeit der Vorrichtung.

2. Bilderzeugungsvorrichtung gemäß Anspruch 1, bei der die erste und die zweite Speichereinrichtung jeweils einen elektrisch löschbaren Festwertspeicher (ROM-Speicher) aufweisen.

3. Bilderzeugungsvorrichtung gemäß Anspruch 1, bei der die erste und die zweite Speichereinrichtung jeweils einen RAM-Speicher, gesichert durch eine Batterie, aufweisen.

## Revendications

1. Dispositif de formation d'image, comprenant :
un panneau (6) pour enregistrer au moins un jeu de symboles dans lequel un caractère et un code d'une police à utiliser pour un traitement d'image sont liées à des données d'identification (ID), et permettant de sélectionner un jeu de symboles enregistré en sélectionnant ses données d'ID;
des premiers moyens de stockage (8) destinés à stocker ledit jeu de symboles;
des seconds moyens de stockage (9) destinés à stocker les données d'ID dans une base non volatile; et
des moyens (2) permettant de lire ledit jeu de symboles sur la base desdites données d'ID sélectionnées en accédant auxdits seconds moyens de stockage (9) au moment de la mise en marche du dispositif.

2. Dispositif de formation d'image selon la revendication 1, dans lequel lesdits premiers et seconds moyens de stockage comprennent respectivement une mémoire morte effaçable électriquement.

3. Dispositif de formation d'image selon la revendication 1, dans lequel lesdits premiers et seconds moyens de stockage comprennent respectivement une mémoire vive sauvegardée par une pile.
